# EUROPEAN PATENT SPECIFICATION

(11) **EP 3 962 211 B1**
(45) Date of publication and mention of the grant of the patent: **28.10.2026**
(21) Application number: 21195728.7
(22) Date of filing: 17.03.2017
(51) Int. Cl.: H04W 72/04, H04L 5/00

(54) **UPLINK TRANSMISSION METHOD, APPARATUS, TERMINAL DEVICE, ACCESS NETWORK DEVICE AND SYSTEM**
VERFAHREN ZUR UPLINK-ÜBERTRAGUNG, EINRICHTUNG, ENDGERÄTEVORRICHTUNG, ZUGANGSNETZWERKVORRICHTUNG UND SYSTEM
PROCÉDÉ DE TRANSMISSION DE LIAISON MONTANTE, APPAREIL, DISPOSITIF TERMINAL, DISPOSITIF DE RÉSEAU D'ACCÈS ET SYSTÈME

(43) Date of publication of application: 02.03.2022
(62) Document number(s) of the earlier application(s) in accordance with Art. 76 EPC: 17901279.4 / 3 595 376
(73) Proprietor: GUANGDONG OPPO MOBILE TELECOMMUNICATIONS CORP., LTD., Dongguan, Guangdong 523860 (CN)
(72) Inventor: LIN, Yanan, Dongguan, 523860 (CN)
(74) Representative: Manitz Finsterwald Patent- und Rechtsanwaltspartnerschaft mbB

(56) References cited:
- EP-A1- 3 396 887
- US-A1- 2016 360 518
- LG ELECTRONICS: "Overall structure of NR-PUCCH formats", vol. RAN WG1, no. Spokane, USA; 20170116 - 20170120, 16 January 2017 (2017-01-16), XP051208033, Retrieved from the Internet <URL:http://www.3gpp.org/ftp/Meetings_3GPP_SYNC/RAN1/Docs/> [retrieved on 20170116]

## Description

### Technical Field

Embodiments of the present application relate to the field of communications, in particular to an uplink transmission method and an uplink transmission apparatus.

### Background

In Long-Term Evolution (LTE), a Physical Uplink Control Channel (PUCCH) is used for carrying Uplink Control Information (UCI) sent from a user equipment (UE) to an evolved base station (eNodeB, eNB). The UCI includes an acknowledgement (ACK) and a negative-acknowledgement (NACK) for feedback of Physical Downlink Shared Channel (PDSCH) transmission, and Channel-State Information (CSI), etc.

A conventional PUCCH is transmitted in a Physical Resource Block (PRB) allocated at an edge of a system bandwidth, occupying 12 subcarriers in frequency domain and 7 symbols in time domain. However, in a 5th generation (5G) New Radio (NR) system, PUCCHs of two time lengths, namely short-PUCCH and long-PUCCH, are simultaneously supported to meet new design requirements of low delay and fast feedback. The short-PUCCH includes 1 or 2 time-domain symbols, and the long-PUCCH includes at least 4 time domain symbols. Currently, there is no solution for transmission design of a Reference Signal (RS) and UCI in the short-PUCCH.

Prior art examples are depicted by the document "Overall structure of NR-PUCCH formats",3GPP DRAFT; R1-1700502 16 January 2017 (2017-01-16) by LG ELECTRONICS, by US 2016/360518 and by EP 3396887 (an Art. 54(3) EPC prior art document).

### Summary

The invention is defined by the independent claims. Optional embodiments are set forth in the dependent claims.

The technical solution provided by the embodiment of the application has the following beneficial effects: by dividing the resources used for transmitting the short-PUCCH into at least two resource sets, the access network device configuring the resource set of the first category and the resource set of the second category in the at least two resource sets to the terminal device, and the terminal sending the uplink control channel according to the configuration of the access network device, overhead and structure of the reference signals in the short-PUCCH can be dynamically adjusted, and a good performance for PUCCH demodulation can be obtained .

### Brief Description of Drawings

To describe technical solutions in embodiments of the present application more clearly, drawings that need to be used in the description of the embodiments will be briefly introduced below. It is apparent that the drawings described below are only some embodiments of the present application, and for those of ordinary skill in the art, other drawings may be obtained according to these drawings without paying an inventive effort.
FIG. 1 is a schematic diagram of structure of a mobile communication system provided by an exemplary embodiment of the present application.
FIG. 2 is a schematic diagram of division of sets of resources for a short-PUCCH provided by an exemplary embodiment of the present application.
FIG. 3 is a flowchart of an uplink transmission method provided by an exemplary embodiment of the present application.
FIG. 4 is a flowchart of an uplink transmission method provided by another exemplary embodiment of the present application.
FIG. 5 is a flowchart of an uplink transmission method provided by another exemplary embodiment of the present application.
FIG. 6 is a schematic diagram of division of sets of resources for a short-PUCCH provided by an exemplary embodiment of the present application.
FIG. 7 is a schematic diagram of division of sets of resources for a short-PUCCH provided by another exemplary embodiment of the present application.
FIG. 8 is a schematic diagram of division of sets of resources for a short-PUCCH provided by another exemplary embodiment of the present application.
FIG. 9 is a block diagram of structure of an uplink transmission apparatus provided by another exemplary embodiment of the present application.
FIG. 10 is a block diagram of structure of an uplink transmission apparatus provided by another exemplary embodiment of the present application.
FIG. 11 is a block diagram of structure of a terminal device provided by another exemplary embodiment of the present application.
FIG. 12 is a block diagram of structure of an access network device provided by another exemplary embodiment of the present application.

### Detailed Description

To make objects, technical solutions and advantages of the present application more clearer, implementations of the present application will be described in further detail below with reference to the accompanying drawings.

The "module" mentioned herein generally refers to programs or instructions stored in a storage, which can implement certain functions. The "unit" mentioned herein generally refers to a functional structure divided according to logic, and the "unit" may be implemented by hardware alone or a combination of hardware and software.

The "multiple" mentioned herein refers to two or more. The "and/or" is an association relationship describing associated objects, indicating that there may be three relationships, for example, A and/or B, which may indicate three situations: A alone, A and B, and B alone. The character "/" generally indicates that the objects before and after the character have an "or" relationship.

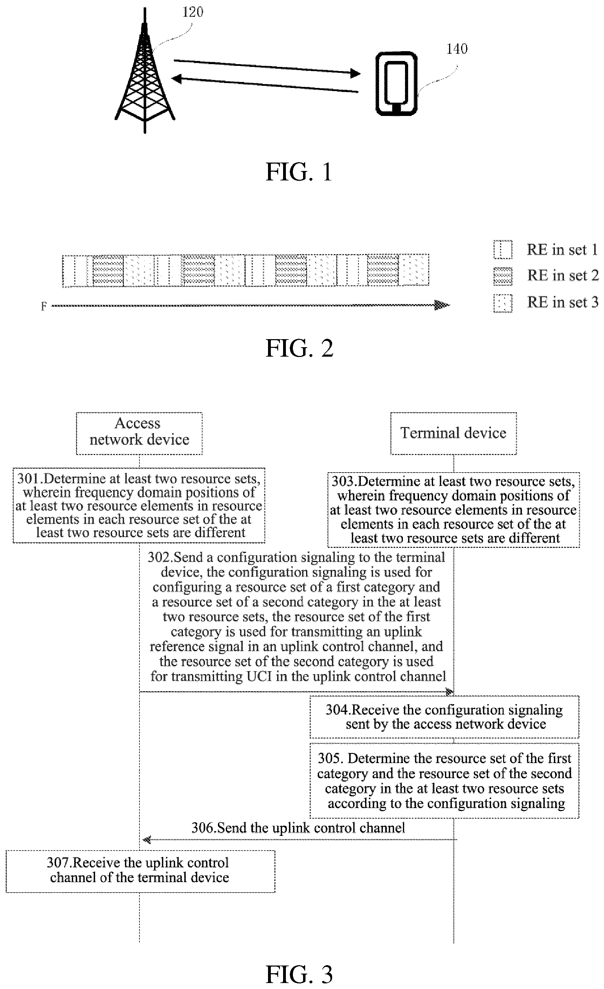

Referring to FIG. 1, FIG.1 is a schematic diagram of structure of a mobile communication system provided by an embodiment of the present application. The mobile communication system may be a 5G system, which is also called a new radio (NR) system. The mobile communication system includes an access network device 120 and a terminal 140.

The Access network device 120 may be a base station. For example, the base station may be a base station (gNB) with a central distributed architecture in the 5G system. When the central distributed architecture is used for the access network device, the access network device 120 usually includes a central unit (CU) and at least two distributed units (DUs). The central unit is provided with protocol stacks of a Packet Data Convergence Protocol (PDCP) layer, a Radio Link Control (RLC) layer and a Media Access Control (MAC) layer. The distributed unit is provided with a Physical (PHY) layer protocol stack. The embodiments of the present application do not limit the specific implementations of the access network device 120. Optionally, the access network device may also include a Home eNB (HeNB), a Relay, and a Pico base station, etc.

The access network device 120 and the terminal 140 establish a radio connection through a radio air interface. Optionally, the radio air interface is a radio air interface based on a 5th generation mobile communication network technology (5G) standard. For example, the radio air interface is a New Radio (NR). Optionally, the radio air interface may be a radio air interface based on a next generation mobile communication network technology standard beyond 5G.

The terminal 140 may refer to a device that provides voice and/or data connectivity to a user. The terminal may communicate with one or more core networks via a Radio Access Network (RAN). The terminal 140 may be a mobile terminal, such as a mobile phone (or called a "cellular" phone) and a computer with a mobile terminal, e.g., a portable, pocket-sized, handheld, computer-built or vehicle-mounted mobile device. For example, the terminal may be a Subscriber Unit, a Subscriber Station, a Mobile Station, a Mobile, a Remote Station, an Access Point, a Remote Terminal, an Access Terminal, a User Terminal, a User Agent, a User Device, or a User Equipment.

It should be noted that the mobile communication system shown in FIG. 1 may include a plurality of access network devices 120 and/or a plurality of terminals 140. In FIG. 1, one access network device 120 and one terminal 140 are illustrated, but the embodiment is not limited thereto.

In the 5G NR, some new designs of low delay and fast feedback are required. For example, one time slot may be divided into a downlink portion and an uplink portion, and the downlink portion and the uplink portion are separated by a Guard Period (GP). The downlink portion consists of one or more symbols. At the starting of the time slot, a gNB sends downlink data and signaling to a UE through the downlink portion. The UE completes transmission switching from the downlink to the uplink through the GP, then the UE transmits an uplink control channel and an uplink shared channel in the uplink portion. In the uplink portion, in order to realize fast feedback (eventually leading to fast turnover time), the UE may be required to feed back ACK/NACK (and other possible UCI) for a physical downlink shared channel (PDSCH) carried by the downlink portion in the current time slot. In this case, a new PUCCH is introduced into the NR, and the new PUCCH is sent at the end of the time slot. Since the new PUCCH may occupy only the last one or several symbols in the time slot, the new PUCCH may be referred to as a PUCCH with a short duration, or a PUCCH with a short format, or a short-PUCCH. Herein, the uplink control channel may have any other possible names, and the embodiments of the present application do not limit possible names and abbreviations of the uplink control channel.

The short-PUCCH is mainly used for feeding back ACK/NACK, and a valid payload of the short-PUCCH may be 1-2 bits or more. An expected standard design may have a good scalability from a low payload (1-2 bits) to a high payload (> 2 bits). It is further expected that the design of a short-PUCCH with 2 symbols (or possibly > 2 symbols) may be extended from the design of a short-PUCCH with 1 symbol. Aspects to be considered may include frequency diversity, power boost, a good capacity of the PUCCH, and RS overhead, etc.

To realize these requirements and expectations, Resource Elements (REs) used for the short-PUCCH may be divided into several resource sets. REs in each resource set are evenly distributed in frequency, and the REs in each resource set are interleaved with the REs in other resource sets. Each resource set may be used for sending an uplink Reference Signal (RS) or uplink control information (UCI).

REs used for the short-PUCCH usually belong to at least one time slot unit of at least one Physical Resource Block (PRB), for example, 12 REs in 1 time slot symbol of 1 PRB, 24 REs in 2 time slot symbols of 1 PRB, 24 REs in 1 time slot symbol of 2 PRBs, 48 REs in 2 time slot symbols of 2 PRBs, etc. Time-frequency resources used for the short-PUCCH may be divided into at least two resource sets.

FIG. 2 shows an example in which time-frequency resources used for a short-PUCCH include 12 REs in 1 time slot symbol of 1 PRB, the 12 REs are divided into 3 resource sets, the REs in each resource set are evenly distributed in frequency, and REs from the each resource set are interleaved with REs from other resource sets. Herein, REs in a resource set 1 may be used for carrying an RS, and REs in a resource set 2 and a resource set 3 may be used for carrying UCI. Since the RSs are expected to be evenly distributed in frequency for a good channel estimation performance, the REs from various resource sets are interleaved together.

Referring to FIG. 3, FIG. 3 is a flowchart of an uplink transmission method provided by an exemplary embodiment. The embodiment is described by taking the uplink transmission method applied to the mobile communication system shown in FIG. 1 as an example. In the embodiment, the terminal device may be a UE, and the access network device may be a gNB. The present embodiment may be applied to a scenario for sending a short-PUCCH. The method includes the following acts 301-307.

In act 301, an access network device determines at least two resource sets, and frequency domain positions of at least two resource elements in resource elements in each resource set of the at least two resource sets are different.

The access network device divides time-frequency resources used for a short-PUCCH into at least two resource sets according to a preset set division way. Each resource set is used for transmitting an RS or UCI.

There are at least two REs of which frequency domain positions are different in REs of the each resource set. Optionally, in a resource set, frequency domain positions of a part of REs are the same, and frequency domain positions of the other part of REs are different. Or, frequency domain positions of all REs in one resource set are different. By distributing REs in one resource set as discretely as possible, a better channel estimation gain can be obtained when the resource set is used for transmitting the RS.

In act 302, the access network device sends a configuration signaling to a terminal device, wherein the configuration signaling is used for configuring a resource set of a first category and a resource set of a second category in the at least two resource sets, the resource set of the first category is used for transmitting an uplink reference signal in an uplink control channel, and the resource set of the second category is used for transmitting UCI in the uplink control channel.

For a given resource set, whether the resource set is used for transmitting the RS or the UCI is dynamically configured by the access network device. For example, in FIG. 2, a resource set 1 is used for transmitting the RS, and a resource set 2 and a resource set 3 are used for transmitting the UCI. For another example, in the FIG. 2, the resource sets 1 and 2 are used for transmitting the RS, and the resource set 3 is used for transmitting the UCI.

According to an actual scenario of the uplink sending of the terminal device, the access network device generates the configuration signaling for the terminal device. The configuration signaling is used for configuring the resource set of the first category and the resource set of the second category in at least two resource sets for the short-PUCCH. Herein, the resource set of the first category is used for transmitting an RS in a short-PUCCH, and the resource set of the second category is used for transmitting UCI in the short-PUCCH. The resource set of the first category includes one or more resource sets, and the resource set of the second category includes one or more resource sets. In a scenario where the RS does not need to be sent, a quantity of the resource set of the second category may be zero.

A specific configuration mode of the configuration signaling may be any one of the following three configuration modes.

First, the configuration signaling is used for explicitly configuring the resource set of the first category, and implicitly indicating that the resource set of the second category is other resource sets except the resource set of the first category. For example, referring to FIG. 2, when the access network device explicitly indicates that the resource set 1 is the resource set of the first category in the configuration signaling, the terminal determines the resource set 2 and the resource set 3 as the resource set of the second category while determining that the resource set 1 is the resource set of the first category according to the configuration signaling.

Second, the configuration signaling is used for explicitly configuring the resource set of the second category, and implicitly indicating that the resource set of the first category is other resource sets except the resource set of the second category. For example, referring to FIG. 2, when the access network device explicitly indicates in the configuration signaling that the resource set 2 is the resource set of the second category, the terminal determines other resource sets except the resource set of the second category as the resource set of the first category while determining that the resource set 2 is the resource set of the second category according to the configuration signaling, that is, the terminal determines the resource set 1 and the resource set 3 as the resource set of the first category.

Third, the configuration signaling is used for explicitly configuring the resource set of the first category and the resource set of the second category. For example, refer to FIG. 2, the access network device explicitly indicates in the configuration signaling that the resource sets 2 and 3 are the resource set of the first category and the resource set 1 is the resource set of the second category, then the terminal determines that the resource sets 2 and 3 are the resource set of the first category and the resource set 1 is the resource set of the second category according to the configuration signaling.

Preferably, the second configuration signaling is adopted, that is, the configuration signaling is used for explicitly configuring the resource set of the second category, and implicitly indicating that the resource set of the first category is other resource sets except the resource set of the second category.

Optionally, the configuration signaling is carried in a high-layer signaling or Downlink Control Information (DCI). For example, the high-layer signaling may be a Radio Resource Control (RRC) reconfiguration signaling. The configuration signaling may be semi-statically configured or dynamically notified.

In act 303, the terminal device determines the at least two resource sets, and the frequency domain positions of at least two resource elements in resource elements in each resource set of the at least two resource sets are different.

Optionally, the terminal device divides the time-frequency resources used for the short-PUCCH into at least two resource sets according to the same set division way as that of the access network device. Each resource set is used for transmitting the RS or the UCI.

This act may be performed before, or after the act 302, or simultaneously with the act 302, or after act 304, and the embodiment is not limited thereto.

In act 304, the terminal device receives the configuration signaling sent by the access network device.

In act 305, the terminal device determines a resource set of a first category and a resource set of a second category in the at least two resource sets according to the configuration signaling.

The resource set of the first category is used for transmitting uplink control information in an uplink control channel, and the resource set of the second category is used for transmitting an uplink reference signal in the uplink control channel.

In act 306, the terminal device sends the uplink control channel.

According to the configuration signaling, the terminal device sends the uplink control information, such as an ACK/NACK, on the resource elements of the resource set of the first category; and sends an uplink reference signal, such as a Demodulation Reference Signal (DM-RS), on the resource elements of the resource set of the second category.

In act 307, the access network device receives the uplink control channel of the terminal device.

According to the configuration signaling, the access network device receives the uplink control information, such as an ACK/NACK, on the resource elements of the resource set of the first category; and receives the uplink reference signal, such as the DM-RS, on the resource elements of the resource set of the second category.

In conclusion, in the uplink transmission method provided by the present embodiment, the resources used for transmitting the short-PUCCH are divided into at least two resource sets, the access network device configures the resource set of the first category and the resource set of the second category in the at least two resource sets to the terminal device, and the terminal sends the uplink control channel according to the configuration of the access network device, so that the RS overhead and structure in the short-PUCCH can be dynamically adjusted, thereby obtaining a better PUCCH demodulation performance.

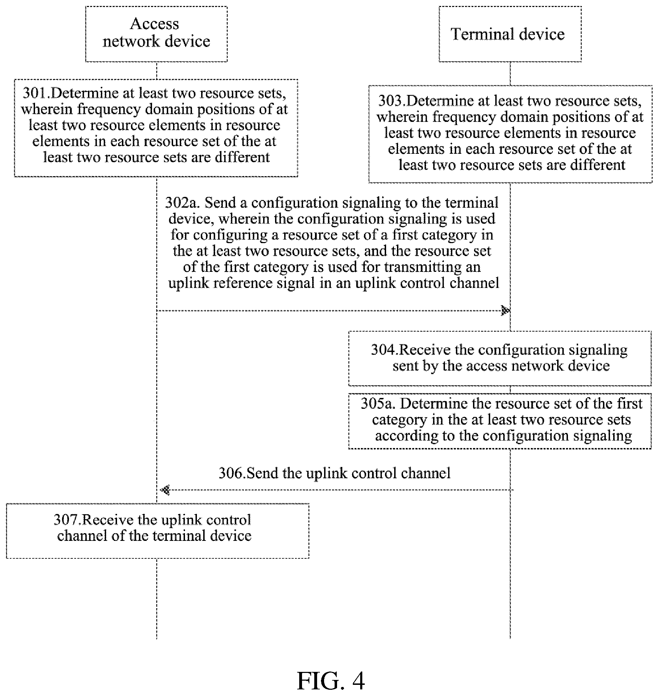

In an optional embodiment based on FIG. 3, in some scenarios where the RS does not need to be sent, the at least two resource sets may all be configured as the resource set of the first category, in this case the above configuration signaling is only used for configuring the resource set of the first category in the at least two resource sets, the act 302 may be replaced with act 302a, and act 305 may be replaced with act 305a, as shown in FIG. 4.

In an optional embodiment based on FIG. 3, a set division way used for dividing the time-frequency resources for the short-PUCCH into at least two resource sets, may be pre-determined by a communication protocol, or pre-configured by an access network device to a terminal device.

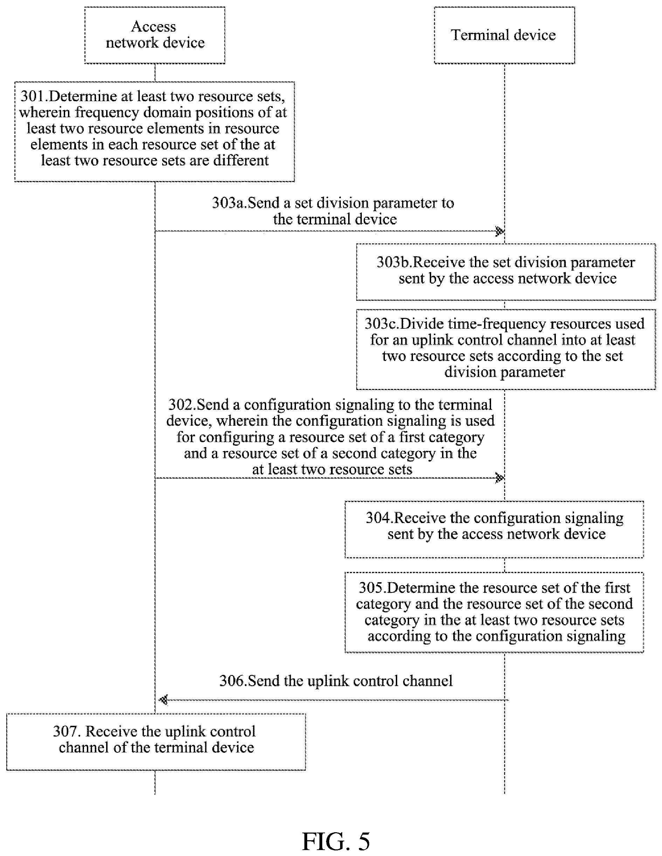

If the set division way is pre-determined, in acts 301 and 303 the access network device and the terminal respectively divides the time-frequency resources for the short-PUCCH according to the pre-determined set division way. If the set division way is pre-configured, the above act 303 may be replaced with acts 303a to 303c, as shown in FIG. 5.

In act 303a, the access network device sends a set division parameter to the terminal device.

The set division parameter includes at least one of: a quantity of resource sets, a quantity of resource sets in each time slot unit, a quantity of resource sets in each PRB, and a quantity of REs in each resource set.

In act 303b, the terminal device receives the set division parameter sent by the access network device.

In act 303c, the terminal device divides time-frequency resources for an uplink control channel into at least two resource sets according to the set division parameter.

The time-frequency resources for the uplink control channel may include at least one time domain unit on at least one resource block, and the at least one time domain unit is one or two time domain symbols.

Herein, according to different embodiments, the set division way includes but is not limited to following three ways.

A set division way 1: there are T resource blocks and N time domain units, and the quantity of the at least two resource sets is P=N*A, wherein resource elements of each time domain unit is divided into A resource sets, and P, N and A are all positive integers.

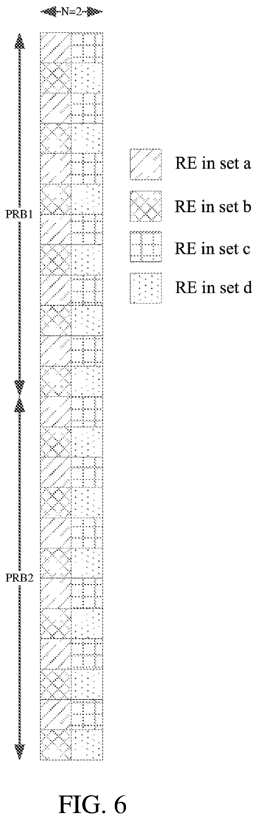

Exemplarily, assuming T=2, N=2, and referring to FIG. 6, the time-frequency resources for the short-PUCCH include 48 REs in 2 time domain symbols of 2 PRBs. 12 REs in each time domain symbol are divided into 2 resource sets to obtain a total quantity P=N*A=2*2=4 of resource sets. That is, 12 REs numbered 1, 3, 5, 7, 9, 11, 13, 15, 17, 19, 21 and 23 in the first time domain symbol are divided into a resource set a, and 12 REs numbered 2, 4, 6, 8, 10, 12, 14, 16, 18, 20, 22 and 24 in the first time domain symbol are divided into a resource set b; 12 REs numbered 1, 3, 5, 7, 9, 11, 13, 15, 17, 19, 21 and 23 in the second time domain symbol are divided into a resource set c, and 12 REs numbered 2, 4, 6, 8, 10, 12, 14, 16, 18, 20, 22 and 24 in the second time domain symbol are divided into a resource set d.

Herein, the first time domain symbol refers to a symbol on a left side of two adjacent symbols, and the second time domain symbol refers to a symbol on a right side of the two adjacent symbols in the figure. The RE number refers to a serial number according to an order from top to bottom.

A set division way 2: there are T resource blocks and N time domain units, and a quantity of the at least two resource sets is P=N*T*B, wherein the resource elements in each time domain unit of each resource block are divided into B resource sets, and P, N and B are all positive integers.

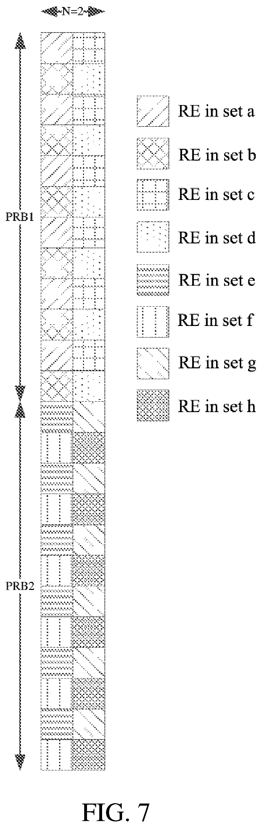

Exemplarily, assuming T=2, N=2, and referring to FIG. 7, time-frequency resources for a short-PUCCH include 48 REs in 2 time domain symbols of 2 PRBs. 12 REs in each time domain symbol of each PRB are divided into 2 resource sets to obtain a total quantity P=T*N*B=2*2*2=8 of resource sets. That is, 6 REs numbered 1, 3, 5, 7, 9, 11 in the first time domain symbol of the first PRB are divided into a resource set a, and 6 REs numbered 13, 15, 17, 19, 21, and 23 in the first time domain symbol of the first PRB are divided into a resource set b; 6 REs numbered 1, 3, 5, 7, 9 and 11 in the second time domain symbol of the first PRB are divided into a resource set c, and 6 REs numbered 13, 15, 17, 19, 21 and 23 in the first time domain symbol of the first PRB are divided into a resource set d; 6 REs numbered 1, 3, 5, 7, 9 and 11 in the first time domain symbol of the second PRB are divided into a set e, and 6 REs numbered 13, 15, 17, 19, 21 and 23 in the first time domain symbol of the second PRB are divided into a resource set f; 6 REs numbered 1, 3, 5, 7, 9 and 11 in the second time domain symbol of the second PRB are divided into a resource set g, and 6 REs numbered 13, 15, 17, 19, 21 and 23 in the first time domain symbol of the second PRB are divided into a resource set h.

A set division way 3: at least one resource block includes a target resource block and T-1 other resource blocks (total quantity is T), the quantity of time domain units is N, and the quantity of the at least two resource sets are P=N*C. Resource elements of N time domain units in the target resource block are divided into C resource sets, and the set division way of other resource blocks is the same as that of the target resource block.

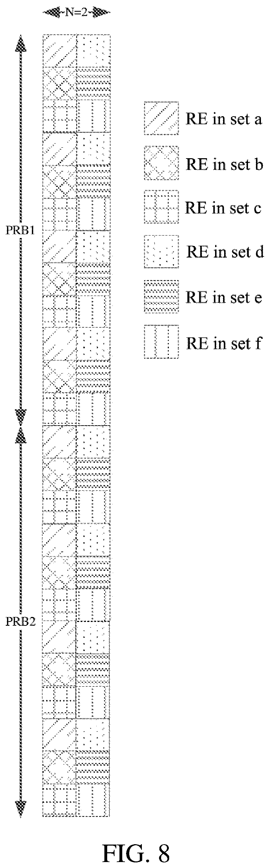

Exemplarily, assuming T=2, N=2, and referring to FIG. 8, time-frequency resources for a short-PUCCH include 48 REs in 2 time domain symbols of 2 PRBs. 12 REs in each time domain symbol of the first PRB are divided into 3 resource sets, and the second PRB adopts the same set division way as that of the first PRB to obtain a total quantity P=T*N*C=2*3=6 of resource sets. That is, 4 REs numbered 1, 4, 7 and 10 in the first time domain symbol of the first PRB are divided into a resource set a; 4 REs numbered 2, 5, 8 and 11 in the first time domain symbol of the first PRB are divided into a resource set b; 4 REs numbered 3, 6, 9 and 12 in the first time domain symbol of the first PRB are divided into a resource set c; 4 REs numbered 1, 4, 7 and 10 in the second time domain symbol of the first PRB are divided into a resource set d; 4 REs numbered 2, 5, 8 and 11 in the second time domain symbol of the first PRB are divided into a resource set e; 4 REs numbered 3, 6, 9 and 12 in the second time domain symbol of the first PRB are divided into a resource set f.

In the above three set division ways, the set division parameter includes at least one of: a quantity of resource sets in each PRB, a quantity of resource sets in each time domain symbol, a quantity of resource sets in each time domain symbol of each PRB, a set division way (one of the above three division way), and a position of a resource block.

Optionally, distribution of REs in each resource set satisfies at least one of following characteristics:
1. Each resource set of the at least two resource sets contains a same quantity of resource elements. For example, the each resource set in FIG. 6 includes 12 REs, the each resource set in FIG. 7 includes 6 REs, and the each resource set in FIG. 8 includes 8 REs.
2. The resource elements in the each resource set of the at least two resource sets belong to one time domain unit in time domain. For example, the resource elements in the resource set a in FIG. 6 belong to the first time domain symbol, the resource elements in the resource set b in FIG. 6 belong to the first time domain symbol, the resource elements in the resource set c in FIG. 6 belong to the second time domain symbol, and the resource elements in the resource set d in FIG. 6 belong to the second time domain symbol.
3. The resource elements in the each resource set of the at least two resource sets belong to one resource block in frequency domain. For example, REs in the each resource set in FIG. 7 belong to the same PRB in the frequency domain.
4. The resource elements in the each resource set of the at least two resource sets belong to a plurality of resource blocks in the frequency domain, and the uplink control channel is transmitted through the plurality of resource blocks. The "plurality" in the present application refers to at least two.
   For example, REs in the each resource set in FIGs. 6 and 8 belong to 2 PRBs in the frequency domain.
5. The resource elements belonging to one time domain unit in the each resource set of the at least two resource sets are distributed with an equal interval in the frequency domain.

For example, the resource elements belonging to one time domain unit in the each resource set in FIGs. 6 and 7 are distributed with an equal interval (an interval of 1) in the frequency domain. The resource elements belonging to one time domain unit in the each resource set in FIG. 8 are distributed with an equal interval (an interval of 2) in the frequency domain.

Optionally, each resource set has a corresponding set index. The mode for establishing a set index includes any of following four modes.

First, the at least two resource sets are indexed according to an order of firstly frequency domain and then time domain. Taking FIG. 7 as an example, the order of resource set indexes thereof is { set a, set b, set e, set f, set c, set d, set g, set h}.

Second, the at least two resource sets are indexed according to an order of firstly time domain and then frequency domain. Taking FIG. 7 as an example, the order of resource set indexes thereof is {set a, set c, set b, set d, set e, set g, set f, set h}.

Third, the at least two resource sets are indexed in each resource block according to an order of firstly frequency domain and then time domain, and then indexed according to an ascending or descending order of resource blocks. For example, assuming a downward order in FIG. 7 is the ascending order of PRBs, and the order of resource set indexes thereof is {set a, set b, set c, set d, set e, set f, set g, set h}.

Fourth, the at least two resource sets are indexed in each resource block according to an order of firstly time domain and then frequency domain, and then indexed according to an ascending or descending order of resource blocks. For example, assuming a downward order in FIG. 7 is the ascending order of PRBs, and the order of resource set indexes thereof is {set a, set c, set b, set d, set e, set g, set f, set h}.

In the method embodiments described above, when the gNB sends the configuration signaling to the UE, the configuration signaling carries the set index of the resource set of the first category, or the set indexes of the resource set of the first category and the resource set of the second category, or the set index of the resource set of the second category.

In the method embodiments described above, the uplink reference signal sent by the terminal device in the uplink control channel includes: a Demodulation Reference Signal (DM-RS) and a Sounding Reference Signal (SRS). The DM-RS is used by the base station for performing channel estimation on coherent demodulation of the uplink physical channel (PUSCH and PUCCH). Therefore, the DM-RS is sent together with the PUCCH. The SRS is used by the base station for estimating uplink channel states of different frequencies.

When a terminal device sends an uplink reference signal on REs in a resource set of a second category, the terminal device may transmit one or more uplink reference signals, and each uplink reference signal is sent by using one or more resource sets of the second category. A length Q of a reference signal sequence used for the uplink reference signal may adopt any one of following two forms.

First, the length Q of the reference signal sequence used for the uplink reference signal is equal to a quantity of REs in one (or single) resource set of the second category corresponding to the uplink reference signal. For example, when the RS is sent in the resource set a shown in FIG. 6, the length Q of the reference signal sequence = the quantity of REs in the resource set a = 12.

Second, the length Q of the reference signal sequence used for the uplink reference signal is equal to a quantity of resource elements in a single resource block in one (or single) resource set of a second category corresponding to the uplink reference signal. For example, when the RS is sent in the resource set a shown in FIG. 6, the length Q of the reference signal sequence = the quantity of REs in the resource set a =12.

Optionally, the above-mentioned reference signal sequence is a Zadoff-Chu sequence. The same one uplink reference signal is usually transmitted in the REs in one resource set of the second category, but in a scenario where the terminal needs to transmit multiple uplink reference signals, different uplink reference signals may be multiplexed in the REs in the same resource set of the second category for transmission. That is, the resource set of the second category corresponding to different uplink reference signals may be the same resource set, or different resource sets.

In the above method embodiments, the UCI sent by the terminal device in the uplink control channel includes at least one of: an ACK/NACK for feedback of a PDSCH, Channel-State Information (CSI), and a Scheduling Request (SR).

When a terminal device sends an uplink control signal on REs in a resource set of a first category, the terminal device modulates the UCI to obtain at least one UCI modulated symbol to be sent, and each resource set of the first category is used for transmitting one UCI modulated symbol. After spread spectrum is performed on the UCI modulated symbol through a spreading sequence, the terminal device transmits the spread UCI modulated symbol on all REs in the corresponding resource set of the first category.

Optionally, a length of a spreading sequence is equal to a quantity of REs in a resource set of a first category corresponding to a UCI modulated symbol. For example, each resource set in FIG. 7 includes 6 REs. When one UCI modulated symbol is transmitted by using a resource set a, spread spectrum is performed on the UCI modulated symbol by using a spreading sequence of which a length is 6, and then the spread UCI modulated symbol is mapped to 6 REs in the resource set a for transmission.

In conclusion, since a gNB may dynamically configure the resource set of the first category for transmitting the UCI and the resource set of the second category for transmitting the RS to the UE according to factors, such as channel conditions of the UE and an amount of data to be sent, the resource division for the short-PUCCH is dynamically configured, thereby better RS overhead and a better or best PUCCH demodulation performance are achieved.

The following is apparatus embodiments of the embodiments of the present application. The parts which are not described detailedly in the apparatus embodiments, may refer to the technical details disclosed in the above method embodiments.

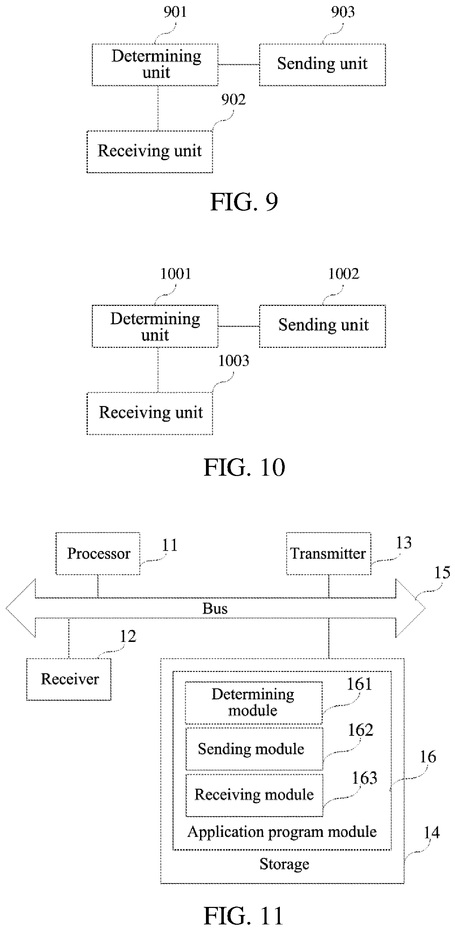

Referring to FIG. 9, FIG. 9 is a schematic diagram of structure of an uplink data apparatus provided by an embodiment of the present application. The uplink data apparatus may be realized as all or a part of the terminal device through software, hardware, or a combination of the software and hardware. The uplink data apparatus includes a determining unit 901, a receiving unit 902, and a sending unit 903.

The determining unit 901 is used for performing functions of the above acts 303, 303c, 305a and at least one of other explicit or implicit determination acts.

The receiving unit 902 is used for performing functions of the above acts 304, 303b and at least one of other explicit or implicit receiving acts.

The sending unit 903 is used for performing the above act 306 and at least one of other explicit or implicit sending acts.

Referring to FIG. 10, FIG. 10 is a schematic diagram of structure of an uplink data apparatus provided by an embodiment of the present application. The uplink data apparatus may be realized as all or a part of a receiving terminal through software, hardware, or a combination of the software and hardware. The uplink data apparatus includes a determining unit 1001, a sending unit 1002, and a receiving unit 1003.

The determining unit 1001 is used for performing functions of the above acts 301, 303c and at least one of other explicit or implicit determination acts.

The sending unit 1002 is used for performing functions of the above acts 302, 302a, 303a and at least one of other explicit or implicit receiving acts.

The receiving unit 1003 is used for performing functions of the above act 307 and at least one of other explicit or implicit receiving acts.

Referring to FIG. 11, FIG. 11 is a schematic diagram of structure of a terminal device provided by an exemplary embodiment of the present application. The receiving end includes a processor 11, a receiver 12, a transmitter 13, a storage 14 and a bus 15.

The processor 11 includes one or more processing cores. The processor 11 executes various functional applications and information processing by running software programs and modules.

The receiver 12 and the transmitter 13 may be implemented as a communication component, and the communication component may be a communication chip. The communication chip may include a receiving module, a transmitting module, a modulation and demodulation module, etc., for modulating and/or demodulating information, and receiving or transmitting the information through radio signals.

The storage 14 is connected with the processor 11 via the bus 15.

The storage 14 may be used for storing software programs and modules.

The storage 14 may store at least one application program module 16 for functions described. The application program module 16 may include a determining module 161, a receiving unit 162, and a sending module 163.

The processor 11 is used for executing the determining module 161 to implement the determination acts in the above various method embodiments. The processor 11 is used for executing the sending module 162 to implement the sending acts in the above various method embodiments. The processor 12 is used for executing the receiving module 163 to implement the receiving acts in the above various method embodiments.

In addition, the storage 14 may be implemented by any type of volatile or nonvolatile storage device or a combination thereof, such as a static random access memory (SRAM), an electrically erasable programmable read only memory (EEPROM), an erasable programmable read only memory (EPROM), a programmable read only memory (PROM), a read only memory (ROM), a magnetic memory, a flash memory, a magnetic disk or an optical disk.

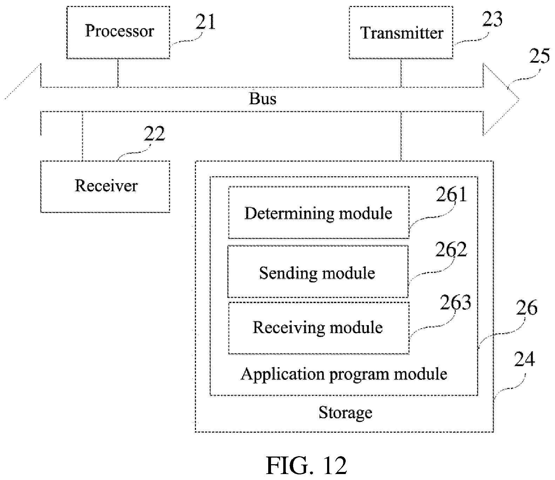

Referring to FIG. 12, FIG. 12 is a schematic diagram of structure of an access network device provided by an exemplary embodiment of the present application. The access network device includes a processor 21, a receiver 22, a transmitter 23, a storage 24 and a bus 25.

The processor 21 includes one or more processing cores. The processor 21 executes various functional applications and information processing by running software programs and modules.

The receiver 22 and the transmitter 23 may be implemented as a communication component, and the communication component may be a communication chip. The communication chip may include a receiving module, a transmitting module, a modulation and demodulation module, etc. for modulating and demodulating information, and receiving or transmitting the information through radio signals.

The storage 24 is connected with the processor 21 via the bus 25.

The storage 24 may be used for storing software programs and modules.

The storage 24 may store at least one application program module 26 for functions described. The application program module 26 may include a determining module 261, a sending module 262, and a receiving module 263.

The processor 21 is used for executing the receiving module 263 to implement the receiving acts in the above various method embodiments. The processor 21 is used for executing the determining module 261 to implement the determination acts in the above various method embodiments. The processor 21 is used for executing the transmitting module 262 to implement the sending acts in the above various method embodiments.

In addition, the storage 24 may be implemented by any type of volatile or nonvolatile storage device or a combination thereof, such as a static random access memory (SRAM), an electrically erasable programmable read only memory (EEPROM), an erasable programmable read only memory (EPROM), a programmable read only memory (PROM), a read only memory (ROM), a magnetic memory, a flash memory, a magnetic disk or an optical disk.

An embodiment of the present application further provides an uplink data system, which may include a terminal device and an access network device.

The terminal device may include the uplink data apparatus provided in the FIG. 9, and the access network device may include the uplink data apparatus provided in the FIG. 10.

Optionally, the terminal device may be the above access network device provided in FIG. 11, and the access network device may be the above terminal device provided in FIG. 12.

Those skilled in the art should appreciate that, in one or more examples described above, the functions described in the embodiments of the present application may be implemented by software, hardware, firmware or any combination thereof. When the functions are implemented by using the software, these functions may be stored in a computer readable medium or transmitted as one or more instructions or codes on the computer readable medium. The computer readable medium includes a computer storage medium and a communication medium, wherein the communication medium includes any medium that facilitates the transfer of computer programs from one place to another. The storage medium may be any available medium accessible by a general-purpose computer or a special-purpose computer.

The above description is only the preferred embodiments of the present application, and is not intended to limit the present application. Any modification, equivalent substitution, improvement, etc., can be made within the scope of the appended claims.

## Claims

1. An uplink transmission method, comprising:
sending (S303a), by an access network device, a set division parameter to a terminal device, wherein the set division parameter is used for determining at least two resource sets, wherein the set division parameter comprises a quantity of resource sets, wherein frequency domain positions of at least two resource elements in each resource set of the at least two resource sets are different, and resource elements in the each resource set of the at least two resource sets belong to one time domain symbol;
sending (S302), by the access network device, a configuration signaling to the terminal device, wherein the configuration signaling is used for configuring one or more resource sets of a first category in the at least two resource sets, and the one or more resource sets of the first category are used for transmitting uplink control information, UCI, in an uplink control channel; and
receiving (S307), by the access network device, the uplink control channel, wherein the uplink control channel comprises the UCI.

2. The method according to claim 1, wherein the configuration signaling is further used for configuring one or more resource sets of a second category in the at least two resource sets, and the one or more resource sets of the second category are used for transmitting an uplink reference signal in the uplink control channel.

3. The method according to claim 1 or 2, wherein the configuration signaling is used for explicitly configuring the one or more resource sets of the second category, and implicitly indicating that the one or more resource sets of the first category is other resource sets except the one or more resource sets of the second category.

4. The method according to claim 2, wherein,
a length Q of a reference signal sequence used for the uplink reference signal is equal to a quantity of resource elements in one resource set of the second category corresponding to the uplink reference signal; or, a length Q of a reference signal sequence used for the uplink reference signal is equal to a quantity of resource elements in a single resource block in one resource set of the second category corresponding to the uplink reference signal.

5. The method according to any one of claims 1 to 4, wherein a quantity of the at least two resource sets is equal to a quantity of time domain symbols to transmit the uplink control channel.

6. The method according to any one of claims 1 to 4, wherein,
resource elements in the each resource set of the at least two resource sets belong to one resource block in frequency domain; or,
resource elements in the each resource set of the at least two resource sets belong to a plurality of resource blocks in frequency domain, and the uplink control channel is transmitted through the plurality of resource blocks.

7. The method according to any one of claims 1 to 6, wherein at least one resource set of the first category is used for transmitting the UCI; each resource set of the first category is used for transmitting one UCI modulation symbol;
each UCI modulation symbol, after spreading is performed, is mapped to all resource elements in the at least one resource set of the first category for transmission.

8. An uplink transmission apparatus, comprising a sending unit (1002) and a receiving unit (1003), wherein
the sending unit (1002) is configured for sending a set division parameter to a terminal device, wherein the set division parameter is used for determining at least two resource sets, wherein the set division parameter comprises a quantity of resource sets, wherein frequency domain positions of at least two resource elements in each resource set of the at least two resource sets are different, and resource elements in the each resource set of the at least two resource sets belong to one time domain symbol;
the sending unit (1002) is further configured for sending a configuration signaling to a terminal device, wherein the configuration signaling is used for configuring one or more resource sets of a first category in the at least two resource sets, and the one or more resource sets of the first category are used for transmitting uplink control information, UCI, in an uplink control channel; and
the receiving unit (1003) is configured for receiving the uplink control channel, wherein the uplink control channel comprises the UCI.

9. The apparatus according to claim 8, wherein the configuration signaling is further used for configuring one or more resource sets of a second category in the at least two resource sets, and the one or more resource sets of the second category are used for transmitting an uplink reference signal in the uplink control channel.

10. The apparatus according to claim 8 or 9, wherein the configuration signaling is used for explicitly configuring the one or more resource sets of the second category, and implicitly indicating that the one or more resource sets of the first category is other resource sets except the one or more resource sets of the second category.

11. The apparatus according to claim 8, wherein,
a length Q of a reference signal sequence used for the uplink reference signal is equal to a quantity of resource elements in one resource set of the second category corresponding to the uplink reference signal; or,
the length Q of the reference signal sequence used for the uplink reference signal is equal to a quantity of resource elements in a single resource block in one resource set of the second category corresponding to the uplink reference signal.

12. The apparatus according to any one of claims 8 to 11, wherein a quantity of the at least two resource sets is equal to a quantity of time domain symbols to transmit the uplink control channel.

13. The apparatus according to any one of claims 8 to 11, wherein,
resource elements in the each resource set of the at least two resource sets belong to one resource block in frequency domain; or,
resource elements in the each resource set of the at least two resource sets belong to a plurality of resource blocks in frequency domain, and the uplink control channel is transmitted through the plurality of resource blocks.

14. The apparatus according to any one of claims 8 to 13, wherein,
resource elements belonging to one time domain unit in the each resource set of the at least two resource sets are distributed with an equal interval in frequency domain.

15. The apparatus according to any one of claims 8 to 14, wherein the configuration signaling comprises a set index of a resource set of the first category; wherein a mode for establishing a set index of the at least two resource sets comprises one of the following:
the at least two resource sets are indexed according to an order of firstly frequency domain and then time domain;
the at least two resource sets are indexed according to an order of firstly time domain and then frequency domain;
the at least two resource sets are indexed in each of resource blocks according to an order of firstly frequency domain and then time domain, and then indexed according to an ascending or descending order of the resource blocks; or,
the at least two resource sets are indexed in each of resource blocks according to an order of firstly time domain and then frequency domain, and then indexed according to an ascending or descending order of the resource blocks.

## Patentansprüche

1. Uplink-Übertragungsverfahren, umfassend:
Senden (S303a), durch eine Zugriff-Netzwerkvorrichtung, eines Satzteilungsparameters an eine Endgerätevorrichtung, wobei der Satzteilungsparameter zum Bestimmen von mindestens zwei Ressourcensätzen verwendet wird, wobei der Satzteilungsparameter eine Anzahl von Ressourcensätzen umfasst, wobei Frequenzbereichspositionen von mindestens zwei Ressourcenelementen in dem jeweiligen Ressourcensatz der mindestens zwei Ressourcensätze unterschiedlich sind, und Ressourcenelemente in jedem Ressourcensatz der mindestens zwei Ressourcensätze zu einem Zeitbereichssymbol gehören;
Senden (S302), durch die Zugriff-Netzwerkvorrichtung, einer Konfigurationssignalisierung, an die Endgerätevorrichtung, wobei die Konfigurationssignalisierung ferner zum Konfigurieren eines oder mehrerer Ressourcensätze einer ersten Kategorie in den mindestens zwei Ressourcensätzen verwendet wird, und der eine oder mehrere Ressourcensätze der ersten Kategorie zum Übertragen von Uplink-Steuerinformationen, UCI, in einem Uplink-Steuerkanal verwendet werden; und
Empfangen (S307), durch die Zugriff-Netzwerkvorrichtung, des Uplink-Steuerkanals, wobei der Uplink-Steuerkanal die UCI umfasst.

2. Verfahren nach Anspruch 1, wobei die Konfigurationssignalisierung ferner zum Konfigurieren eines oder mehrerer Ressourcensätze einer zweiten Kategorie in den mindestens zwei Ressourcensätzen, und der eine oder mehrere Ressourcensätze der zweiten Kategorie zum Übertragen eines Uplink-Referenzsignals in dem Uplink-Steuerkanal verwendet werden.

3. Verfahren nach Anspruch 1 oder 2, wobei die Konfigurationssignalisierung zum expliziten Konfigurieren des einen oder mehrerer Ressourcensätze der zweiten Kategorie, und impliziten Angeben verwendet wird, dass es sich bei dem einen oder mehreren Ressourcensätzen der ersten Kategorie um andere Ressourcensätze als den einen oder mehreren Ressourcensätzen der zweiten Kategorie handelt.

4. Verfahren nach Anspruch 2, wobei
eine Länge Q einer Referenzsignalfolge, die für das Uplink-Referenzsignal verwendet wird, gleich einer Anzahl von Ressourcenelementen in einem Ressourcensatz der zweiten Kategorie ist, die dem Uplink-Referenzsignal entspricht; oder, eine Länge Q einer Referenzsignalfolge, die für das Uplink-Referenzsignal verwendet wird, gleich einer Anzahl von Ressourcenelementen in einem einzelnen Ressourcenblock in einem Ressourcensatz der zweiten Kategorie ist, die dem Uplink-Referenzsignal entspricht.

5. Verfahren nach einem der Ansprüche 1 bis 4, wobei eine Anzahl der mindestens zwei Ressourcensätze gleich einer Anzahl von Zeitbereichssymbolen zum Übertragen des Uplink-Steuerkanals ist.

6. Verfahren nach einem der Ansprüche 1 bis 4, wobei
Ressourcenelemente in dem jeweiligen Ressourcensatz der mindestens zwei Ressourcensätze zu einem Ressourcenblock im Frequenzbereich gehören; oder
Ressourcenelemente in dem jeweiligen Ressourcensatz der mindestens zwei Ressourcensätze zu einer Vielzahl von Ressourcenblöcken im Frequenzbereich gehören, und der Uplink-Steuerkanal durch die mehreren Ressourcenblöcke übertragen wird.

7. Verfahren nach einem der Ansprüche 1 bis 6, wobei mindestens ein Ressourcensatz der ersten Kategorie zum Übertragen der UCI verwendet wird; jeder Ressourcensatz der ersten Kategorie zum Übertragen eines UCI-Modulationssymbols verwendet wird;
jedes UCI-Modulationssymbol, nachdem das Spreizen durchgeführt wurde, auf alle Ressourcenelemente in dem mindestens einen Ressourcensatz der ersten Kategorie für das Übertragen gemappt wird.

8. Uplink-Übertragungseinrichtung, umfassend eine Sendeeinheit (1002) und eine Empfangseinheit (1003), wobei die Sendeeinheit (1002) zum Senden eines Satzteilungsparameters an eine Endgerätevorrichtung konfiguriert ist,
wobei der Satzteilungsparameter zum Bestimmen von mindestens zwei Ressourcensätzen verwendet wird, wobei der Satzteilungsparameter eine Anzahl von Ressourcensätzen umfasst, wobei Frequenzbereichspositionen von mindestens zwei Ressourcenelementen in dem jeweiligen Ressourcensatz der mindestens zwei Ressourcensätze unterschiedlich sind, und Ressourcenelemente in jedem Ressourcensatz der mindestens zwei Ressourcensätze zu einem Zeitbereichssymbol gehören;
die Sendeeinheit (1002) ferner dazu konfiguriert ist, eine Konfigurationssignalisierung an eine Endgerätevorrichtung zu senden, wobei die Konfigurationssignalisierung ferner zum Konfigurieren eines oder mehrerer Ressourcensätze einer ersten Kategorie in den mindestens zwei Ressourcensätzen verwendet wird, und der eine oder mehrere Ressourcensätze der ersten Kategorie zum Übertragen von Uplink-Steuerinformationen, UCI, in einem Uplink-Steuerkanal verwendet werden; und
die Empfangseinheit (1003) dazu konfiguriert ist, den Uplink-Steuerkanal zu empfangen, wobei der Uplink-Steuerkanal die UCI umfasst.

9. Einrichtung nach Anspruch 8, wobei die Konfigurationssignalisierung ferner zum Konfigurieren eines oder mehrerer Ressourcensätze einer zweiten Kategorie in den mindestens zwei Ressourcensätzen, und der eine oder mehrere Ressourcensätze der zweiten Kategorie zum Übertragen eines Uplink-Referenzsignals in dem Uplink-Steuerkanal verwendet werden.

10. Einrichtung nach Anspruch 8 oder 9, wobei die Konfigurationssignalisierung zum expliziten Konfigurieren des einen oder mehrerer Ressourcensätze der zweiten Kategorie und impliziten Angeben verwendet wird, dass es sich bei dem einen oder mehreren Ressourcensätzen der ersten Kategorie um andere Ressourcensätze als den einen oder mehreren Ressourcensätzen der zweiten Kategorie handelt.

11. Einrichtung nach Anspruch 8, wobei
eine Länge Q einer Referenzsignalfolge, die für das Uplink-Referenzsignal verwendet wird, gleich einer Anzahl von Ressourcenelementen in einem Ressourcensatz der zweiten Kategorie ist, der dem Uplink-Referenzsignal entspricht; oder
die Länge Q der Referenzsignalfolge, die für das Uplink-Referenzsignal verwendet wird, gleich einer Anzahl von Ressourcenelementen in einem einzelnen Ressourcenblock in einem Ressourcensatz der zweiten Kategorie ist, der dem Uplink-Referenzsignal entspricht.

12. Einrichtung nach einem der Ansprüche 8 bis 11, wobei eine Anzahl der mindestens zwei Ressourcensätze gleich einer Anzahl von Zeitbereichssymbolen zum Übertragen des Uplink-Steuerkanals ist.

13. Einrichtung nach einem der Ansprüche 8 bis 11, wobei
Ressourcenelemente in dem jeweiligen Ressourcensatz der mindestens zwei Ressourcensätze zu einem Ressourcenblock im Frequenzbereich gehören; oder
Ressourcenelemente in dem jeweiligen Ressourcensatz der mindestens zwei Ressourcensätze zu einer Vielzahl von Ressourcenblöcken im Frequenzbereich gehören, und der Uplink-Steuerkanal durch die mehreren Ressourcenblöcke übertragen wird.

14. Einrichtung nach einem der Ansprüche 8 bis 13, wobei
Ressourcenelemente, die zu einer Zeitbereichseinheit in dem jeweiligen Ressourcensatz der mindestens zwei Ressourcensätze gehören, mit einem gleichen Intervall im Frequenzbereich verteilt werden.

15. Einrichtung nach einem der Ansprüche 8 bis 14, wobei die Konfigurationssignalisierung einen festgelegten Index eines Ressourcensatzes der ersten Kategorie umfasst; wobei ein Modus zum Herstellen eines festgelegten Indexes der mindestens zwei Ressourcensätze eines der folgenden umfasst:
die mindestens zwei Ressourcensätze werden gemäß einer Reihenfolge von zuerst Frequenzbereich und dann Zeitbereich indexiert;
die mindestens zwei Ressourcensätze werden gemäß einer Reihenfolge von zuerst Zeitbereich und dann Frequenzbereich indexiert;
die mindestens zwei Ressourcensätze in jedem der Ressourcenblöcke werden gemäß einer Reihenfolge von zuerst Frequenzbereich und dann Zeitbereich indexiert und werden dann gemäß einer auf- oder absteigenden Reihenfolge der Ressourcenblöcke indexiert; oder
die mindestens zwei Ressourcensätze in jedem der Ressourcenblöcke werden gemäß einer Reihenfolge von zuerst Zeitbereich und dann Frequenzbereich indexiert und dann werden gemäß einer auf- oder absteigenden Reihenfolge der Ressourcenblöcke indexiert.

## Revendications

1. Procédé de transmission en liaison montante, comprenant :
l'envoi (S303a), par un dispositif de réseau d'accès, d'un paramètre de division d'ensemble à un dispositif terminal, dans lequel le paramètre de division d'ensemble est utilisé pour déterminer au moins deux ensembles de ressources, dans lequel le paramètre de division d'ensemble comprend une quantité d'ensembles de ressources, dans lequel les positions dans le domaine fréquentiel d'au moins deux éléments de ressources dans chaque ensemble de ressources des au moins deux ensembles de ressources sont différentes, et les éléments de ressources dans chaque ensemble de ressources des au moins deux ensembles de ressources appartiennent à un symbole de domaine temporel ;
l'envoi (S302), par le dispositif de réseau d'accès, d'une signalisation de configuration au dispositif terminal, dans lequel la signalisation de configuration est utilisée pour configurer un ou plusieurs ensembles de ressources d'une première catégorie dans les au moins deux ensembles de ressources, et le ou les ensembles de ressources de la première catégorie sont utilisés pour transmettre des informations de commande de liaison montante, UCI, dans un canal de commande de liaison montante ; et
la réception (S307), par le dispositif de réseau d'accès, du canal de commande de liaison montante, dans lequel le canal de commande de liaison montante comprend les UCI.

2. Procédé selon la revendication 1, dans lequel la signalisation de configuration est en outre utilisée pour configurer un ou plusieurs ensembles de ressources d'une deuxième catégorie dans les au moins deux ensembles de ressources, et le ou les ensembles de ressources de la deuxième catégorie sont utilisés pour transmettre un signal de référence de liaison montante dans le canal de commande de liaison montante.

3. Procédé selon la revendication 1 ou 2, dans lequel la signalisation de configuration est utilisée pour configurer explicitement le ou les ensembles de ressources de la deuxième catégorie, et pour indiquer implicitement que le ou les ensembles de ressources de la première catégorie sont des ensembles de ressources autres que le ou les ensembles de ressources de la deuxième catégorie.

4. Procédé selon la revendication 2, dans lequel,
une longueur Q d'une séquence de signal de référence utilisée pour le signal de référence de liaison montante est égale à une quantité d'éléments de ressource dans un ensemble de ressources de la deuxième catégorie correspondant au signal de référence de liaison montante ; ou, une longueur Q d'une séquence de signal de référence utilisée pour le signal de référence de liaison montante est égale à une quantité d'éléments de ressource dans un seul bloc de ressources dans un ensemble de ressources de la deuxième catégorie correspondant au signal de référence de liaison montante.

5. Procédé selon l'une quelconque des revendications 1 à 4, dans lequel une quantité des au moins deux ensembles de ressources est égale à une quantité de symboles de domaine temporel pour transmettre le canal de commande de liaison montante.

6. Procédé selon l'une quelconque des revendications 1 à 4, dans lequel,
des éléments de ressources dans chaque ensemble de ressources des au moins deux ensembles de ressources appartiennent à un bloc de ressources dans le domaine fréquentiel ; ou,
des éléments de ressources dans chaque ensemble de ressources des au moins deux ensembles de ressources appartiennent à une pluralité de blocs de ressources dans le domaine fréquentiel, et le canal de commande de liaison montante est transmis via la pluralité de blocs de ressources.

7. Procédé selon l'une quelconque des revendications 1 à 6, dans lequel au moins un ensemble de ressources de la première catégorie est utilisé pour transmettre les UCI ; chaque ensemble de ressources de la première catégorie est utilisé pour transmettre un symbole de modulation d'UCI ;
chaque symbole de modulation d'UCI, après qu'un étalement est réalisé, est mappé avec tous les éléments de ressource dans l'au moins un ensemble de ressources de la première catégorie pour la transmission.

8. Appareil de transmission de liaison montante, comprenant une unité d'envoi (1002) et une unité de réception (1003), dans lequel l'unité d'envoi (1002) est configurée pour envoyer un paramètre de division d'ensemble à un dispositif terminal,
dans lequel le paramètre de division d'ensemble est utilisé pour déterminer au moins deux ensembles de ressources, dans lequel le paramètre de division d'ensemble comprend une quantité d'ensembles de ressources, dans lequel des positions dans le domaine fréquentiel d'au moins deux éléments de ressources dans chaque ensemble de ressources des au moins deux ensembles de ressources sont différentes, et les éléments de ressources dans chaque ensemble de ressources des au moins deux ensembles de ressources appartiennent à un symbole de domaine temporel ;
l'unité d'envoi (1002) est en outre configurée pour envoyer une signalisation de configuration à un dispositif terminal, dans lequel la signalisation de configuration est utilisée pour configurer un ou plusieurs ensembles de ressources d'une première catégorie dans les au moins deux ensembles de ressources, et le ou les ensembles de ressources de la première catégorie sont utilisés pour transmettre des informations de commande de liaison montante, UCI, dans un canal de commande de liaison montante ; et
l'unité de réception (1003) est configurée pour recevoir le canal de commande de liaison montante, dans lequel le canal de commande de liaison montante comprend les UCI.

9. Appareil selon la revendication 8, dans lequel la signalisation de configuration est en outre utilisée pour configurer un ou plusieurs ensembles de ressources d'une deuxième catégorie dans les au moins deux ensembles de ressources, et le ou les ensembles de ressources de la deuxième catégorie sont utilisés pour transmettre un signal de référence de liaison montante dans le canal de commande de liaison montante.

10. Appareil selon la revendication 8 ou 9, dans lequel la signalisation de configuration est utilisée pour configurer explicitement le ou les ensembles de ressources de la deuxième catégorie, et pour indiquer implicitement que le ou les ensembles de ressources de la première catégorie sont des ensembles de ressources autres que le ou les ensembles de ressources de la deuxième catégorie.

11. Appareil selon la revendication 8, dans lequel
une longueur Q d'une séquence de signal de référence utilisée pour le signal de référence de liaison montante est égale à une quantité d'éléments de ressource dans un ensemble de ressources de la deuxième catégorie correspondant au signal de référence de liaison montante ; ou,
la longueur Q de la séquence de signal de référence utilisée pour le signal de référence de liaison montante est égale à une quantité d'éléments de ressource dans un seul bloc de ressource dans un ensemble de ressources de la deuxième catégorie correspondant au signal de référence de liaison montante.

12. Appareil selon l'une quelconque des revendications 8 à 11, dans lequel une quantité des au moins deux ensembles de ressources est égale à une quantité de symboles de domaine temporel pour transmettre le canal de commande de liaison montante.

13. Appareil selon l'une quelconque des revendications 8 à 11, dans lequel
des éléments de ressources dans chaque ensemble de ressources des au moins deux ensembles de ressources appartiennent à un bloc de ressources dans le domaine fréquentiel ; ou,
des éléments de ressources dans chaque ensemble de ressources des au moins deux ensembles de ressources appartiennent à une pluralité de blocs de ressources dans le domaine fréquentiel, et le canal de commande de liaison montante est transmis via la pluralité de blocs de ressources.

14. Appareil selon l'une quelconque des revendications 8 à 13, dans lequel
des éléments de ressources appartenant à une unité de domaine temporel dans chaque ensemble de ressources des au moins deux ensembles de ressources sont distribués avec un intervalle égal dans le domaine fréquentiel.

15. Appareil selon l'une quelconque des revendications 8 à 14, dans lequel la signalisation de configuration comprend un index d'ensemble d'un ensemble de ressources de la première catégorie ; dans lequel un mode d'établissement d'un index d'ensemble des au moins deux ensembles de ressources comprend l'un des éléments suivants :
les au moins deux ensembles de ressources sont indexés selon un ordre avec d'abord le domaine fréquentiel puis le domaine temporel ;
les au moins deux ensembles de ressources sont indexés selon un ordre avec d'abord le domaine temporel puis le domaine fréquentiel ;
les au moins deux ensembles de ressources sont indexés dans chacun des blocs de ressources selon un ordre avec d'abord le domaine fréquentiel puis le domaine temporel, puis sont indexés selon un ordre croissant ou décroissant des blocs de ressources ; ou,
les au moins deux ensembles de ressources sont indexés dans chacun des blocs de ressources selon un ordre avec d'abord le domaine temporel puis le domaine fréquentiel, puis sont indexés selon un ordre croissant ou décroissant des blocs de ressources.
